# FASCICULE DE BREVET EUROPEEN

(11) **EP 3 853 044 B1**
(45) Date de publication et mention de la délivrance du brevet: **18.01.2023**
(21) Numéro de dépôt: 19790654.8
(22) Date de dépôt: 17.09.2019
(51) Int. Cl.: B60C 11/03, B60C 11/04, B60C 11/12

(54) **BANDE DE ROULEMENT DE PNEUMATIQUE COMPRENANT DES RAINURES COMPLEXES ET DES INCISIONS**
REIFENLAUFFLÄCHE MIT FEINEINSCHNITTEN UND KOMPLEXEN RILLEN
TYRE TREAD COMPRISING SIPES AND COMPLEX GROOVES

(30) Priorité: 20.09.2018 FR 1858495
(43) Date de publication de la demande: 28.07.2021
(73) Titulaire: COMPAGNIE GENERALE DES ETABLISSEMENTS MICHELIN, 63000 Clermont-Ferrand (FR)
(72) Inventeur: DJABOUR, Walid, 63040 Clermont-Ferrand Cedex 9 (FR); BELARBI, Houria, 63040 Clermont-Ferrand Cedex 9 (FR)
(74) Mandataire: Millanvois, Patrick Jacques Jean
(86) Numéro de dépôt international: PCT/FR2019/052159
(87) Numéro de publication internationale: WO 2020/058622

(56) Documents cités:
- WO-A1-2016/190881
- WO-A1-2017/177132
- FR-A1- 2 967 940
- FR-A1- 3 049 896

## Description

### DOMAINE DE L'INVENTION

L'invention concerne les bandes de roulement pour pneumatiques et plus particulièrement les dessins de sculpture de ces bandes dont les performances en drainage de l'eau par temps de pluie sont rendues plus pérennes, ces bandes de roulement ayant en outre des performances améliorées en usure et en résistance au roulement ; cette invention concerne également les pneumatiques pourvus de telles bandes.

### ÉTAT DE LA TECHNIQUE

De façon connue, les conditions de roulage par temps de pluie d'un véhicule et plus particulièrement d'un poids lourd mais pas uniquement requièrent une évacuation rapide de l'eau qui peut se trouver dans la région de contact du pneumatique ou plus particulièrement sa bande de roulement, avec la chaussée. Cette évacuation permet d'assurer un contact du matériau constituant la bande de roulement avec cette chaussée. L'eau qui n'est pas repoussée sur l'avant et sur les côtés du pneumatique s'écoule ou est captée en partie dans les découpures ou creux formés dans la bande de roulement du pneumatique.

Ces découpures ou creux forment un réseau d'écoulement de fluide qui se doit d'être pérenne c'est-à-dire pouvoir être efficace pendant toute la durée d'utilisation d'un pneumatique entre son état neuf et son retrait pour cause d'usure quand celle-ci atteint une limite fixée par le manufacturier en accord avec la réglementation en vigueur.

En particulier pour les pneumatiques destinés aux essieux directeur ou aux essieux porteur d'un véhicule poids lourd et pour certains pneumatiques moteur destinés à des usages routiers ou autoroutier, il est usuel de former, dans la bande de roulement de ces pneumatiques, des rainures circonférentielles (ou rainures d'orientation longitudinale) dont la profondeur est égale à l'épaisseur totale de la bande de roulement. Cette épaisseur totale ne prend pas en compte l'épaisseur éventuellement prévue pour permettre un renouvellement partiel des rainures par une opération dite de recreusage (« *regrooving* » en anglais), ni l'épaisseur résiduelle permettent de protéger les éléments de renforcement de la couche d'éléments de renforcement la plus radialement extérieure du pneumatique. Ainsi, il est possible d'obtenir une bande de roulement ayant une performance en drainage de l'eau qui est toujours au-dessus d'une performance minimale dite performance de sécurité et cela quel que soit le niveau de l'usure de cette bande.

Pour les pneumatiques de l'état de la technique, le volume total de creux à neuf est en règle générale compris entre 10% et 25% du volume total de la bande de roulement destiné à être usé au cours du roulage (le volume total correspondant au volume de matière auquel est ajouté ledit volume total de creux). On constate que ces pneumatiques ont un volume de creux disponible dans l'aire de contact qui est relativement important à l'état neuf (volume de creux disponible signifiant que ce volume est potentiellement susceptible d'être rempli en partie ou en totalité par de l'eau présente sur la chaussée). Le volume de creux s'ouvrant sur la surface de roulement dans le contact est évalué lorsque le pneumatique est soumis à ses conditions usuelles de gonflage et de charge telles que définies notamment par le règlement E.T.R.T.O. pour l'Europe.

Si des découpures ou plus généralement des cavités sont indispensables au drainage de l'eau dans la région de contact avec la chaussée, la réduction de volume de matière qui en résulte sur la bande, peut affecter sensiblement la performance en usure de cette bande et en conséquence peut réduire la durée d'utilisation du pneumatique résultant d'une augmentation de la vitesse d'usure de ladite bande.

Parmi les découpures qui peuvent être réalisées par moulage dans une bande de roulement, on distingue les rainures et les incisions. Les incisions, à la différence des rainures, ont une largeur telle que les parois en vis-à-vis les délimitant viennent en contact au moins partiellement l'une contre l'autre lors du passage dans le contact.

Les rainures génèrent un abaissement sensible des rigidités de compression et de cisaillement puisque ces rainures délimitent des portions de matière pouvant se déformer comparativement aux portions délimitées par des incisions dont les parois viennent en appui l'une contre l'autre lors du passage dans le contact. Cette diminution de rigidité, dans le cas de la présence de rainures, induit une augmentation des déformations et est susceptible de générer une diminution de la performance en usure de la bande de roulement. On observe une usure plus importante pour une distance parcourue fixée et ceci correspond à une augmentation de la vitesse d'usure de la bande de roulement.

En outre, on constate une augmentation de la résistance au roulement et donc de la consommation des véhicules équipés de tels pneumatiques disposant comparativement de plus de deux rainures, résultant d'une augmentation des pertes hystérétiques liées aux cycles de déformations de la matière composant la bande de roulement.

Pour limiter la baisse du volume total de la bande de roulement, il est possible de disposer des rainures d'orientation longitudinale dites complexes qui ont pour effet que le pourcentage de creux surfacique varie de manière importante voire non-linéaire avec l'usure et ce afin d'augmenter le volume total de la bande de roulement tout en respectant le volume de creux pour le stockage de l'eau minimal quel que soit le niveau d'usure du pneumatique. Ces rainures comprennent alternativement des cavités externes ouvertes sur la surface de roulement à l'état neuf et des cavités internes cachées dans l'épaisseur de la bande de roulement à l'état neuf, les unes et les autres étant reliées pour permettre le stockage de l'eau à l'état neuf dans les cavités internes en passant par les cavités externes.

Dans des brevets DE102016211108, WO2011039194, il est proposé de former une bande de roulement pour pneumatique destiné à un véhicule poids lourd. Cette bande est pourvue de rainures complexes s'ouvrant d'une façon discontinue, à espace régulier ou non, sur la surface de roulement à neuf. Chaque rainure complexe présente des cavités externes ouvertes sur la surface de roulement, ces cavités externes étant disjointes les unes des autres dans la direction principale de la rainure complexe. La direction principale de la rainure complexe correspond à la direction d'écoulement de l'eau dans ladite rainure lors d'un roulage sur sol revêtu d'eau. Cette rainure complexe comprend, outre les cavités externes, des cavités internes formées à l'intérieur de la bande de roulement. Ces cavités internes sont placées radialement et en totalité à l'intérieur par rapport à la surface de roulement à l'état neuf entre les cavités externes. Les cavités internes peuvent être prévues pour être situées à différents niveaux de profondeurs dans l'épaisseur de la bande.

En outre, la continuité de l'écoulement d'eau, ou plus généralement de fluide, à l'état neuf, dans chaque rainure complexe est assurée par la liaison des cavités externes et internes. Les liaisons entre les cavités internes et externes forment une rainure d'orientation longitudinale sur toute la circonférence du pneumatique, indifféremment à l'orientation locale des cavités internes ou externes.

La juxtaposition de cavités internes et externes non liées et ne permettant pas un écoulement de fluide des unes vers les autres sur toute la circonférence du pneumatique, ne constitue pas une rainure d'orientation longitudinale.

Grâce à cette structure de bande de roulement, le volume de l'ensemble des cavités est réduit par rapport à celui que l'on aurait avec des rainures ouvertes en totalité sur la surface de roulement à neuf, ces dernières ayant une profondeur correspondant à la profondeur maximales des cavités internes ou externes. Ce type de rainure complexe permet ainsi de limiter la réduction de rigidité de la bande de roulement à l'état neuf liée directement à la présence des rainures.

Ce type de rainure complexe peut bien entendu être combiné avec la présence d'au moins une rainure ouverte sur toute sa longueur sur la surface de roulement de la bande de roulement dès l'état neuf.

Ce type de rainure complexe peut être décrit comme étant une rainure s'ouvrant à neuf d'une façon discontinue sur la surface de roulement à neuf.

Il a été constaté que la seule présence de rainures complexes ne permettait pas d'atteindre le niveau d'adhérence en motricité et en freinage requis sur certains véhicules poids lourd et qu'il était nécessaire de compléter ces rainures par des incisions s'ouvrant à neuf sur la surface de roulement afin de générer une longueur supplémentaire d'arêtes utile pour atteindre un bon niveau de motricité et une bonne adhérence dans des conditions dites « glissantes » notamment sur sol revêtu d'eau.

Cependant la combinaison de ces incisions pour obtenir une adhérence acceptable avec des rainures complexes comportant notamment des cavités ouvertes et des cavités cachées à neuf conduit à une performance en bruit dégradée. Le document WO 2016/190881 A1 décrit des rainures complexes en combinaison avec des incisions.

### Définitions :

Chaque cavité externe comprend des parois en vis-à-vis, ces parois étant reliées entre elles par un fond formant le fond de la cavité externe. La distance entre les parois en vis-à-vis définit une largeur maximale de la cavité externe. La distance entre les points du fond de la cavité externe les plus à l'intérieur de la bande de roulement et la surface de roulement à neuf définit une profondeur de la cavité externe. Chaque cavité externe a une longueur maximale d'ouverture sur la surface de roulement, cette longueur étant mesurée entre les points les plus éloignés du contour d'arête à neuf de ladite cavité externe.

La surface de roulement d'une bande de roulement correspond à l'ensemble des surfaces élémentaires de la bande pouvant venir en contact avec une chaussée lors du roulage d'un pneumatique pourvu d'une telle bande de roulement.

Par direction radiale, on entend dans le présent document une direction qui est perpendiculaire à l'axe de rotation du pneumatique (cette direction correspond à la direction de l'épaisseur de la bande de roulement).

Par direction transversale ou axiale, on entend une direction parallèle à l'axe de rotation du pneumatique.

Par direction circonférentielle ou direction longitudinale, on entend une direction qui est tangente à tout cercle centré sur l'axe de rotation. Cette direction est perpendiculaire à la fois à la direction axiale et à une direction radiale.

L'épaisseur totale d'une bande de roulement est mesurée à l'état neuf, sur le plan médian équatorial du pneumatique pourvu de cette bande, entre la surface de roulement et la partie radialement la plus à l'extérieur de l'armature de sommet.

Une bande de roulement a une épaisseur maximale de matière à user en roulage, cette épaisseur maximale de matière à user étant en règle générale inférieure à l'épaisseur totale de la bande de roulement.

Le plan médian équatorial est un plan perpendiculaire à l'axe de rotation divisant le pneumatique en deux moitiés égales.

Les conditions usuelles de roulage du pneumatique ou conditions d'utilisation sont celles qui sont définies par la norme E.T.R.T.O. pour des roulages européens ; ces conditions d'utilisation précisent la pression de gonflage de référence correspondant à la capacité de charge du pneumatique indiquée par son indice de charge et son code vitesse. Ces conditions d'utilisation peuvent aussi être dites "conditions nominales" ou "conditions d'usage".

### BREF EXPOSE DE L'INVENTION

L'objectif de l'invention est de proposer une bande de roulement comprenant au moins une rainure complexe d'orientation longitudinale (c'est à dire circonférentielle sur le pneumatique pourvu de ladite bande), cette bande de roulement ayant un niveau approprié en adhérence notamment sur sol revêtu d'eau et ne développant pas d'usure irrégulière tout en limitant le bruit en roulage. Pour cette bande de roulement le risque d'initiation de fissures liée à la capture de cailloux ou à une trop grande déformation locale est en outre réduit.

Cet objectif est atteint par une bande de roulement de pneumatique comprenant :
- une surface de roulement,
- cette bande de roulement étant pourvue d'une sculpture formée par au moins deux rainures d'orientation longitudinale, la sculpture ayant une profondeur sculpture maximale Hm,
- au moins une des rainures d'orientation longitudinale, dite rainure complexe, comprenant alternativement des cavités externes ouvertes sur la surface de roulement à l'état neuf et des cavités internes cachées dans l'épaisseur de la bande de roulement à l'état neuf,
- les cavités externes de chaque rainure complexe s'ouvrant sur la surface de roulement à neuf avec un contour ayant une longueur longitudinale moyenne Lm, et des points d'extrémité les plus éloignés A et B, les cavités externes ayant une profondeur au moins égale à 0.9 Hm,
- les cavités externes de chaque rainure complexe étant séparées par des cavités internes d'une longueur longitudinale moyenne Li, Li étant au moins égale à 0.5^{∗}Lm et au plus égale à 2^{∗}Lm,
- cette bande de roulement comprenant au moins une nervure orientée dans la direction longitudinale de la bande de roulement et délimitée par au moins une desdites rainures complexes, la nervure comprenant des incisions transversales - c'est-à-dire d'orientation égale ou supérieure à 45 degrés avec la direction longitudinale, implantées avec un pas moyen Pm, la profondeur de ces incisions transversales étant au moins égale à la profondeur 0.1^{∗}Hm,
- le pas Pm des incisions transversales étant au plus égal à 0.7 fois la longueur longitudinale moyenne Lm des cavités externes.

Les cavités externes de pleine profondeur, outre une capacité de stockage importante, ont l'avantage vis-à-vis de l'application des réglementations nationales. Elles permettent aux personnes chargées d'appliquer la loi de vérifier de manière évidente que le pneumatique est en état de rouler car de manière évidente l'épaisseur de gomme restante à user est perceptible sur toute la circonférence du pneumatique. C'est également une solution pour assurer au conducteur que ses pneumatiques sont en capacité d'adhérer sur une route glissante.

Pour optimiser la rigidité des nervures pour l'usure et la résistance au roulement, il convient de limiter le nombre de rainures d'orientation longitudinale et donc de rainures complexes. Pour les mêmes raisons, les longueurs des cavités externes et les longueurs des cavités internes doivent avoir une certaine proportionnalité. Pour éviter que le pneumatique au roulage génère un bruit à une fréquence correspondant à l'agencement des différentes cavités avec une forte puissance, les cavités externes et internes n'ont pas obligatoirement une longueur Lm et Li constante sur la circonférence du pneumatique. En variant les longueurs des différentes cavités, la puissance sonore est répartie sur plusieurs fréquences, ce qui diminue nettement la perception de la nuisance sonore. Ainsi n'ayant pas une longueur fixe, les conditions de proportionnalité des cavités internes et externes sont données sur la moyenne de celles-ci sur la rainure complexe considérée.

Préférentiellement, le taux de creux volumique total à neuf est au plus égal à 13% et encore plus préférentiellement au plus égal à 10%. Ce taux est calculé en tenant compte de tous les creux formés dans la bande de roulement.

Les incisions ont une incidence sur le bruit, leur nombre et leur agencement sont plutôt conditionnés par la valeur visée en adhérence, le pas moyen des incisions nécessaire pour une bonne adhérence (proche de lm+li) est supérieur au pas moyen des cavités externes. Cependant cet agencement n'est pas optimum en performance bruit.

Dans le cas de rainures complexes, il est nécessaire de créer une relation entre la longueur moyenne des cavités externes et le pas moyen entre deux incisions. Il apparait de manière étonnante qu'il faille décaler les incisions en fréquence, vers des fréquences supérieures à celle de cavité externe et non du motif complet qui est constitué par la cavité interne et externe, dont le pas effectif est en moyenne Lm+Li. Une condition suffisante pour décaler la fréquence des incisions vers des fréquences supérieures de manière significative est que le pas entre deux incisions soit au plus égal 0.7Lm, ce qui permet un décalage en fréquence plus important.

Ainsi on obtient une collaboration optimisée entre les deux formes de découpures de la sculpture qui sont les incisions et les rainures complexes permettant de gagner sur les performances bruits de l'ordre de de 2 à 4 dB, en ayant une adhérence augmentée tant motricité que freinage et particulièrement en pérennité d'adhérence.

Pour des raisons de résistances à l'usure irrégulière et de résistance à l'arrachement des pointes de gommes comprises entre une incision et une rainure complexe, l'angle des incisions avec la direction circonférentielle est au moins égal à 45°. La profondeur des incisions est au moins égale à 0.1^{∗}Hm que ces incisions soient prévues pour avoir un effet sur une durée faible ou tout le long de l'usage du pneumatique.

Une solution préférée est que les incisions aient un angle avec la direction radiale à savoir avec les plans méridiens afin d'améliorer la résistance à l'usure irrégulière, cet angle étant préférentiellement au moins égal à 5° et au plus égal 20°.

Par usure irrégulière, on entend ici que l'usure n'est pas uniformément répartie sur toute la surface de roulement mais que certaines zones sont davantage usées comparativement à d'autres zones. Cette usure irrégulière peut conduire à un retrait prématuré des pneumatiques d'un véhicule afin de les remplacer par des pneumatiques neufs, ce qui constitue une augmentation sensible du prix de revient kilométrique.

Dans une variante de l'invention, la bande de roulement comprend plusieurs nervures intermédiaires et des nervures de bord ces dernières encadrant axialement les nervures intermédiaires. Chaque nervure intermédiaire délimitée par au moins une rainure complexe, est pourvue d'incisions transversales. Une solution préférée est que la bande de roulement comprenne au moins trois rainures complexes, de préférence que toute rainure d'orientation longitudinale soit une rainure complexe.

Pour répartir au mieux dans l'aire de contact, la surface de contact entre les différentes nervures, il est préféré que les cavités externes de deux rainures complexes adjacentes soient décalées circonférentiellement d'une distance circonférentielle au moins égale à 0.8^{∗}Lm. Cet agencement permet d'améliorer le pneumatique en usure irrégulière.

Pour étaler la puissance sonore dans le temps, il est préféré que les incisions transversales de deux nervures adjacentes soient décalées les unes par rapport aux autres de façon à ce que ces incisions transversales rentrent dans le contact avec la chaussée en un instant différent. Cette caractéristique permet un gain de l'ordre de 1db.

- Préférentiellement, pour des raisons de résistance à la fissuration et à l'arrachement local du composé caoutchouteux de la bande de roulement au niveau où une incision débouche dans une cavité externe, des incisions transversales débouchent dans les cavités externes à une distance longitudinale minimale des extrémités A et B des motifs des cavités externes, au moins égale à 1.5mm.

Une solution préférée est que les motifs des cavités externes soient symétriques par rapport à un axe longitudinal. Les motifs non symétriques génèrent des surconcentrations de contraintes sur les pointes de gommes qu'ajoute l'asymétrie, cela fragilise la sculpture sur ces zones qui sont sensibles à l'arrachement et à l'usure irrégulière.

L'invention concerne également un pneumatique de véhicule poids lourd pourvu d'une bande de roulement telle que décrite précédemment.

D'autres caractéristiques et avantages de l'invention ressortent de la description faite ci-après en référence aux dessins annexés qui montrent, à titre d'exemples non limitatifs, des formes de réalisation de l'objet de l'invention.

### DESCRIPTION DES FIGURES

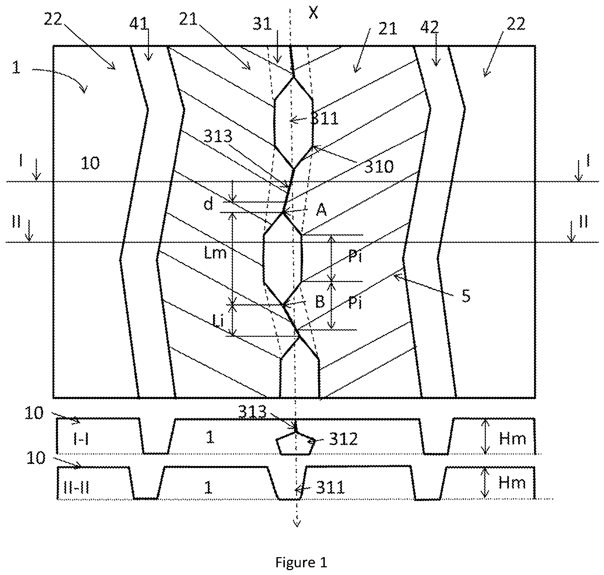

La figure 1 représente une vue de la surface d'une bande de roulement d'un pneumatique de poids lourd d'une variante de l'invention et deux coupes de celle-ci.

La figure 1 présente une variante de de l'invention ayant une surface de roulement 10 destinée à être en contact avec une chaussée lors du roulage d'un pneumatique pourvu de ladite bande. Cette bande 1 présente une épaisseur de matière à user en roulage dans laquelle sont formées des découpures, rainures complexes 31 ou non 41, 42 ou incisions 5.

La figure 1 montre la vue de la surface de roulement 10 de cette bande de roulement à l'état neuf, cette bande comprenant trois rainures d'orientation circonférentielle 31, 41, 42 (selon la direction circonférentielle indiquée par la ligne XX'). La figure 1 représente un cas connu de l'état de l'art où localement les rainures 31, 41, 42 forment un angle avec l'axe longitudinal XX', cependant la moyenne de ces angles des rainures 31, 41, 42 sur le tour du pneumatique est égal à 0. Ces variations locales ne sont pas le signe que les rainures 31, 41, 42 ne sont pas d'orientation circonférentielle.

Ces trois rainures 31, 41, 42 délimitent deux nervures circonférentielles intermédiaires 21 et deux nervures de bord 22, axialement à l'extérieur. Ces rainures 41, 42, non complexes, sont des découpures ouvertes sur toute leur longueur sur la surface de roulement de la bande de roulement à neuf. Ces deux rainures 41, 42 ont une même largeur moyenne et une profondeur ici égale à Hm (visible sur les coupes I et II). Ces deux rainures encadrent une troisième rainure complexe 31 présentant une alternance de cavités externes 311 visibles à l'état neuf de la bande de roulement et de cavités internes 312 cachées dans l'épaisseur de la bande de roulement à l'état neuf, les unes et les autres ayant une profondeur au moins égale à 0.9^{∗}Hm, ici égale à Hm.

Les cavités internes 312 cachées à l'état neuf, sont reliées aux cavités externes 311 assurant la continuité d'un écoulement de fluide dans la rainure à l'état neuf et jusqu'à une usure partielle prédéterminée.

Les cavités externes 311 de chaque rainure complexe 31 s'ouvrent sur la surface de roulement 10 à neuf et sont limitées par un contour 310 de forme octogonale allongée dans la direction circonférentielle et dont les points d'extrémité les plus éloignés A et B sont à une distance longitudinale Lm l'un de l'autre, cette distance Lm mesurant la longueur longitudinale maximale du contour de chaque cavité externe 311, ce qui est toujours réalisable même pour les cas où il existe plusieurs extrémités A et B, il n'existe qu'une longueur longitudinale maximale du motif.

Pour faciliter le moulage et le démoulage de la bande de roulement, il est prévu la formation d'incisions circonférentielles 313 s'ouvrant sur la surface de roulement 10 dans les cavités cachées 312.

Chacune des deux nervures intermédiaires 21 de la bande de roulement est délimitée par à la fois une rainure 41 ou 42 ouverte sur toute sa longueur et par la rainure complexe 31.

Par ailleurs, chacune des nervures intermédiaires 21, est pourvue d'incisions transversales 5 faisant dans le cas présent un angle au moins égal à 45 degrés avec la direction circonférentielle XX'. Ces incisions 5 sont disposées sur chaque nervure intermédiaire 21 avec un même pas moyen Pm, moyenne des distances longitudinale Pi entre deux incisions transversales 5 adjacentes sur une même nervure, sur le tour du pneumatique.

La profondeur des incisions transversales peut être variable et est au moins égale à 0.1^{∗}Hm et au plus égale à la profondeur maximale Hm de la bande de roulement.

Le pas moyen Pm des incisions transversales est dans cet exemple inférieur à la longueur longitudinale moyenne Lm des cavités externes (311) de près de 50%.

Toutes les incisions 5 qui débouchent dans la rainure complexe 3, y débouchent à une distance longitudinale d des extrémités A et B du contour 310 des cavités externes, au moins égale à 1.5 mm.

La figure 1 montre également deux vues en coupe selon des plans dont les traces sur la bande de roulement sont repérées respectivement par les lignes I-I et II-II.

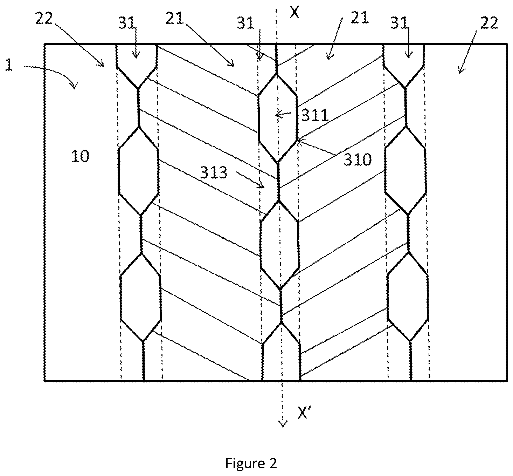

La figure 2 représente une vue de la surface de roulement d'une bande de roulement 1d'une variante de l'invention, où toutes les rainures d'orientation longitudinale sont des rainures complexes 31. Les cavités externes 311 de deux rainures complexes adjacentes sont décalées circonférentiellement et les incisions transversales de deux nervures adjacentes soient décalées les unes par rapport aux autres de façon à ce que ces incisions transversales rentrent dans le contact avec la chaussée en un instant différent.

Grâce à ces agencements des incisions transversales 5 et des cavités externes 311 de la rainure complexe 31, il est possible de réaliser une bande de roulement ayant un niveau satisfaisant en adhérence notamment sur lors de roulage sur sol revêtu d'eau et ne développant pas d'usure irrégulière tout en limitant le bruit en roulage. Par ailleurs, cette bande de roulement diminue le risque d'initiation de fissures liée à la capture de cailloux.

L'invention a été testée sur un pneumatique pour poids lourd de dimension 315/70 R 22.5.

Cette bande de roulement 1 a une largeur W égale à 265mm et une épaisseur de matière à user égale à 13 mm ; elle est pourvue d'une sculpture formée de cinq rainures complexes d'orientation circonférentielle et de profondeur égale à 13 mm.

Les rainures complexes comportent des cavités externes ouvertes sur la surface de roulement à neuf et des cavités internes cachées à l'intérieur de la bande de roulement. Ces cavités externes et internes sont reliées entre elles pour former une rainure complexe sur toute la circonférence du pneumatique. La largeur moyenne de ces cavités internes et externes est égale à 8 mm. Les cavités externes et les cavités internes ont une profondeur égale à 13 mm.

Les cavités externes 311 ont un contour 310 sur la surface de roulement 10 à neuf de forme octogonale symétrique allongée de longueur moyenne Lm égale dans cette variante à 33 mm. Ces cavités externes 311 sont agencées dans la direction circonférentielle avec un pas égal à 66 mm.

La sculpture de la bande de roulement délimite ainsi quatre nervures intermédiaires 21, et deux nervures de bord 22, ces dernières délimitant axialement la largeur W de la bande. Chaque nervure intermédiaire est délimitée par deux rainures complexes.

Les rainures sont agencées de façon à ce que les nervures intermédiaires aient toutes une même largeur moyenne Ln égale à 30 mm.

Cette bande de roulement a un taux de creux volumique à neuf valant 12 .5%.

En outre, chaque nervure intermédiaire comprend des incisions 5 d'orientation générale oblique parallèles entre elles sur une même nervure et agencées avec un pas moyen Pm (correspondant à la distance moyenne entre deux incisions adjacentes mesurée dans la direction circonférentielle) ; dans le cas présent ce pas Pm est égal à 22 mm pour un pneumatique A selon l'invention et de 55 mm pour un pneumatique B d'essai hors invention, satisfaisant les critères d'adhérence visés.

L'orientation générale d'une incision 5 est obtenue comme l'angle que fait un segment de droite passant par les points d'extrémité de l'incision avec la direction transversale - indiquée par l'axe YY' sur le plan de la figure 4. Les incisions 5 sont implantées sur toutes les nervures intermédiaires avec une orientation générale faisant un angle moyen - en valeur absolue - égal à 27 degrés avec la direction transversale, soit 73° (>45°) avec la direction longitudinale. En outre, ces incisions 5 sont agencées sur les nervures intermédiaires pour conférer un caractère directionnel au dessin de sculpture de la bande de roulement 1, les incisions 5 sur une moitié de la bande de roulement ayant une même orientation tandis que sur l'autre moitié l'angle d'orientation est de valeur opposée.

Pour obtenir un bon niveau de performance en adhérence notamment sur sol revêtu d'eau sans développer d'usure irrégulière et tout en limitant le bruit en roulage, une incision5 par nervure s'ouvrent sur chaque cavité externe 311 des rainures complexes. Les plus proches des extrémités A et B du contour de chaque cavité externe 311 sont à des distances respectives de 5 mm.

En positionnant ces incisions 5, au plus près des extrémités A et B du contour 310 de chaque cavité externe 311, et en limitant l'écart entre ces distances, il est de manière surprenante possible de régler les problèmes mentionnés et également de limiter le risque d'initiation de fissures liée à la capture de cailloux.

Le pneumatique A selon l'invention améliore de 1 dB la performance du pneumatique B, la performance étant testée selon la norme en vigueur dans l'Union Européenne (UNECE Reg.117) sur les performances des pneumatiques. Par ailleurs l'adhérence sur sol de faible adhérence, dont le coefficient de frottement inférieur 0.1, est améliorée de 30%.

## Revendications

1. Bande de roulement (1) de pneumatique comprenant :
• une surface de roulement (10),
• cette bande de roulement étant pourvue d'une sculpture formée par au moins deux rainures d'orientation longitudinale (31, 41, 42), la sculpture ayant une profondeur sculpture maximale Hm,
• au moins une des rainures d'orientation longitudinale (31), dite rainure complexe, comprenant alternativement des cavités externes (311) ouvertes sur la surface de roulement à l'état neuf et des cavités internes (312) cachées dans l'épaisseur de la bande de roulement à l'état neuf,
• les cavités externes (311) de chaque rainure complexe (31) s'ouvrant sur la surface de roulement (10) à neuf avec un contour (310) ayant une longueur longitudinale moyenne Lm, et des points d'extrémité les plus éloignés A et B, les cavités externes ayant une profondeur au moins égale à 0.9 Hm,
• les cavités externes (311) de chaque rainure complexe (31) étant séparées par des cavités internes d'une longueur longitudinale moyenne Li, Li étant au moins égale à 0.5^{∗}Lm et au plus égale à 2^{∗}Lm,
• cette bande de roulement comprenant au moins une nervure (21) orientée dans la direction longitudinale de la bande de roulement et délimitée par au moins une desdites rainures complexes, la nervure (21) comprenant des incisions transversales (5) - c'est-à-dire d'orientation égale ou supérieure à 45 degrés avec la direction longitudinale, implantées avec un pas moyen Pm, la profondeur de ces incisions transversales (5) étant au moins égale à la profondeur 0.1^{∗}Hm,
• **caractérisée en ce que** le pas Pm des incisions transversales est au plus égal à 0.7 fois la longueur longitudinale moyenne Lm des cavités externes (311).

2. Bande de roulement selon la revendication 1 **caractérisée en ce que** la bande de roulement comprend au moins trois rainures complexes.

3. Bande de roulement selon la revendication 1 ou la revendication 2 **caractérisée en ce que** toute rainure d'orientation longitudinale est une rainure complexe.

4. Bande de roulement selon l'une quelconque des revendications 1 à 3 **caractérisée en ce que** les cavités externes (311) de deux rainures complexes adjacentes (31) sont décalées circonférentiellement d'une distance circonférentielle au moins égale à 0.8^{∗}Lm.

5. Bande de roulement selon l'une quelconque des revendications 1 à 4 **caractérisée en ce que** les incisions transversales de deux nervures adjacentes soient décalées les unes par rapport aux autres de façon à ce que ces incisions transversales rentrent dans le contact avec la chaussée en un instant différent.

6. Bande de roulement selon l'une quelconque des revendications 1 à 5 **caractérisée en ce que** des incisions transversales débouchent dans les cavités externes à une distance longitudinale minimale (d) des extrémités A et B des motifs des cavités externes, au moins égale à 1.5mm.

7. Bande de roulement selon l'une quelconque des revendications 1 à 6 **caractérisée en ce que** les motifs des cavités externes sont symétriques par rapport à un axe longitudinal.

8. Bande de roulement selon l'une quelconque des revendications 1 à 7 **caractérisée** en ce le taux de creux volumique à neuf est au plus égal à 13% et encore plus préférentiellement au plus égal à 10%.

9. Pneumatique de véhicule poids lourd pourvu d'une bande de roulement selon l'une quelconque des revendications 1 à 8.

## Patentansprüche

1. Laufstreifen (1) für einen Luftreifen, umfassend:
• eine Lauffläche (10),
• wobei dieser Laufstreifen mit einem Profil versehen ist, das aus mindestens zwei Rillen mit Längsausrichtung (31, 41, 42) gebildet wird, wobei das Profil eine maximale Profiltiefe Hm aufweist,
• wobei mindestens eine der Rillen mit Längsausrichtung (31), komplexe Rille genannt, alternierend äußere Kavitäten (311), die im Neuzustand an der Lauffläche offen sind, und innere Kavitäten (312), die im Neuzustand in der Dicke des Laufstreifens verborgen sind, umfasst,
• wobei sich die äußeren Kavitäten (311) jeder komplexen Rille (31) im Neuzustand an der Lauffläche (10) mit einer Kontur (310) öffnen, die eine mittlere Längslänge Lm aufweist und am weitesten entfernte Endpunkte A und B, wobei die äußeren Kavitäten eine Tiefe von mindestens 0,9 Hm aufweisen,
• wobei die äußeren Kavitäten (311) jeder komplexen Rille (31) durch innere Kavitäten mit einer mittleren Längslänge Li getrennt sind, wobei Li mindestens 0,5*Lm und höchstens 2*Lm beträgt,
• wobei dieser Laufstreifen mindestens eine Rippe (21) umfasst, die in Längsrichtung des Laufstreifens ausgerichtet ist und durch mindestens eine der komplexen Rillen begrenzt wird, wobei die Rippe (21) Quereinschnitte (5), d. h. mit einer Ausrichtung von 45 Grad oder mehr zur Längsrichtung, umfasst, die mit einer mittleren Schrittweite Pm angeordnet sind, wobei die Tiefe dieser Quereinschnitte (5) mindestens gleich der Tiefe 0,1*Hm ist,
• **dadurch gekennzeichnet, dass** die Schrittweite Pm der Quereinschnitte höchstens gleich dem 0,7-Fachen der mittleren Längslänge Lm der äußeren Kavitäten (311) ist.

2. Laufstreifen nach Anspruch 1, **dadurch gekennzeichnet, dass** der Laufstreifen mindestens drei komplexe Rillen umfasst.

3. Laufstreifen nach Anspruch 1 oder Anspruch 2, **dadurch gekennzeichnet, dass** jede Rille mit Längsausrichtung eine komplexe Rille ist.

4. Laufstreifen nach einem der Ansprüche 1 bis 3, **dadurch gekennzeichnet, dass** die äußeren Kavitäten (311) von zwei benachbarten komplexen Rillen (31) umfänglich um einen umfänglichen Abstand von mindestens 0,8*Lm versetzt sind.

5. Laufstreifen nach einem der Ansprüche 1 bis 4, **dadurch gekennzeichnet, dass** die Quereinschnitte von zwei benachbarten Rippen zueinander so versetzt sind, dass diese Quereinschnitte zu einem unterschiedlichen Zeitpunkt mit der Fahrbahn in Kontakt gelangen.

6. Laufstreifen nach einem der Ansprüche 1 bis 5, **dadurch gekennzeichnet, dass** Quereinschnitte in den äußeren Kavitäten in einem minimalen Längsabstand (d) von den Enden A und B der Muster der äußeren Kavitäten von mindestens 1,5 mm münden.

7. Laufstreifen nach einem der Ansprüche 1 bis 6, **dadurch gekennzeichnet, dass** die Muster der äußeren Kavitäten in Bezug auf eine Längsachse symmetrisch sind.

8. Laufstreifen nach einem der Ansprüche 1 bis 7, **dadurch gekennzeichnet, dass** der volumenbezogene Hohlraumanteil im Neuzustand höchstens 13 % und noch bevorzugter höchstens 10 % beträgt.

9. Luftreifen für ein Schwerlastfahrzeug, der mit einem Laufstreifen nach einem der Ansprüche 1 bis 8 versehen ist.

## Claims

1. Tyre tread (1) comprising:
• a tread surface (10),
• this tread being provided with a tread pattern formed by at least two longitudinally oriented grooves (31, 41, 42), the tread pattern having a maximum tread pattern depth Hm,
• at least one of the longitudinally oriented grooves (31), known as a complex groove, comprising alternately external cavities (311) that open onto the tread surface in the new state and internal cavities (312) that are hidden within the thickness of the tread in the new state,
• the external cavities (311) of each complex groove (31) opening onto the tread surface (10) when new with a contour (310) having a mean longitudinal length Lm, and furthest apart end points A and B, the external cavities having a depth at least equal to 0.9 Hm,
• the external cavities (311) of each complex groove (31) being separated by internal cavities having a mean longitudinal length Li, Li being at least equal to 0.5^{∗}Lm and at most equal to 2^{∗}Lm,
• this tread comprising at least one rib (21) oriented in the longitudinal direction of the tread and delimited by at least one of said complex grooves, the rib (21) comprising transverse sipes (5) - that is to say sipes with an orientation equal to or greater than 45 degrees to the longitudinal direction, made at a mean spacing Pm, the depth of these transverse sipes (5) being at least equal to the depth 0.1^{∗}Hm,
• **characterized in that** the spacing Pm of the transverse sipes is at most equal to 0.7 times the mean longitudinal length Lm of the external cavities (311).

2. Tread according to Claim 1, **characterized in that** the tread comprises at least three complex grooves.

3. Tread according to Claim 1 or Claim 2, **characterized in that** the entire longitudinally oriented groove is a complex groove.

4. Tread according to any one of Claims 1 to 3, **characterized in that** the external cavities (311) of two adjacent complex grooves (31) are offset circumferentially by a circumferential distance at least equal to 0.8^{∗}Lm.

5. Tread according to any one of Claims 1 to 4, **characterized in that** the transverse sipes of two adjacent ribs are offset with respect to one another such that these transverse sipes come into contact with the road surface at different times.

6. Tread according to any one of Claims 1 to 5, **characterized in that** transverse sipes open into the external cavities at a minimum longitudinal distance (d) from the ends A and B of the tread pattern elements of the external cavities at least equal to 1.5 mm.

7. Tread according to any one of Claims 1 to 6, **characterized in that** the tread pattern elements of the external cavities are symmetric with respect to a longitudinal axis.

8. Tread according to any one of Claims 1 to 7, **characterized in that** the volumetric void ratio when new is at most equal to 13% and even more preferably at most equal to 10%.

9. Tyre for a heavy-duty vehicle provided with a tread according to any one of Claims 1 to 8.
